# EUROPÄISCHE PATENTSCHRIFT

(11) **EP 1 424 757 B1**
(45) Veröffentlichungstag und Bekanntmachung des Hinweises auf die Patenterteilung: **14.03.2018**
(21) Anmeldenummer: 03025230.8
(22) Anmeldetag: 05.11.2003
(51) Int. Cl.: H02G 1/12, H01R 43/28

(54) **Einrichtung zur Messung der Länge eines zu konfektionierenden Kabels**
Device for length measurement in order to make a cable ready-for-use
Dispositif pour mesurer la longueur d'un câble à façonner

(30) Priorität: 26.11.2002 EP 02406024
(43) Veröffentlichungstag der Anmeldung: 02.06.2004
(73) Patentinhaber: Komax Holding AG, 6036 Dierikon (CH)
(72) Erfinder: Viviroli, Stefan, Dipl.El.-Ing. ETH, 6048 Horw (CH); Fischer, Daniel, Dipl.Masch.-Ing. HTL, 6005 Luzern (CH)
(74) Vertreter: Inventio AG

(56) Entgegenhaltungen:
- US-A- 5 522 130
- US-A- 6 135 164
- DATABASE WPI Section EI, Week 199641 Derwent Publications Ltd., London, GB; Class V04, AN 1996-411346 XP002238472 & SU 1 831 217 A (OSNASTKA PRODN ASSOC), 20. Februar 1996 (1996-02-20)
- DATABASE WPI Section EI, Week 198845 Derwent Publications Ltd., London, GB; Class V04, AN 1988-321720 XP002238473 & SU 1 394 303 A (BLUSHTEIN G G), 7. Mai 1988 (1988-05-07)

## Beschreibung

Die Erfindung betrifft eine Einrichtung und ein Verfahren zur Messung der Länge eines Kabels, welches zur Konfektionierung Bearbeitungsstationen zuführbar ist, wobei eine Kabelvorschubeinrichtung das Kabel vorschiebt und Zuführeinrichtungen die Kabelenden den Bearbeitungsstationen zuführen.

Üblicherweise wird die Länge des ersten Kabels eines Produktionsloses manuell nachgemessen. Die Abweichung der Kabellänge von der Vorgabe wird der Steuerung der Kabelvorschubeinrichtung als Korrekturfaktor eingegeben.

Die manuelle Nachprüfung der Kabellänge ist zeit- und personalintensiv. Zudem sind fehlerhafte Messungen oder fehlerhafte Korrekturen nicht ausgeschlossen.

US 5,522,130 A zeigt eine Kabelbearbeitungseinrichtung zum Ablängen und Abisolieren von Kabeln mit einer Messrolle zum Messen des mittels eines Bandantriebs transportierten Kabels. Weiter umfasst die Einrichtung eine laserbasierte Sensoreinheit zum Erfassen der abisolierten Kabelenden.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Einrichtung bzw. ein Verfahren zur Erfassung der Länge eines zur Konfektionierung vorgesehenen Kabels zu schaffen, mittels der bzw. dem die Kabellänge verlässlich messbar ist.

Vorteilhafte Weiterbildungen der Erfindung sind in den abhängigen Patentansprüchen angegeben.

Die durch die Erfindung erreichten Vorteile sind im wesentlichen darin zu sehen, dass die Messung der effektiven Länge des vorgeschobenen Kabels unabhängig vom Anpressdruck der Transportrollen bzw. der Transportbänder der Kabelvorschubeinrichtung ist. Im weiteren ist die Messung unabhängig von der Kabelisolation und unabhängig vom Walken der Kabelisolation durch die Kabelvorschubeinrichtung oder durch den Richtapparat während des Kabelvorschubes.

Anhand der beiliegenden Figuren wird die vorliegende Erfindung näher erläutert.

Es zeigen:
Fig. 1
   eine Kabelverarbeitungsmaschine mit zwei Schwenkarmen,
Fig. 2
   eine Messstrecke mit einem Kabelenddetektor
Fig. 3
   Einzelheiten des Kabelenddetektors,
Fig. 4
   ein Signal des Kabelenddetektors,
Fig. 5 und Fig. 6
   Ausführungsvarianten der Kabelverarbeitungsmaschine.

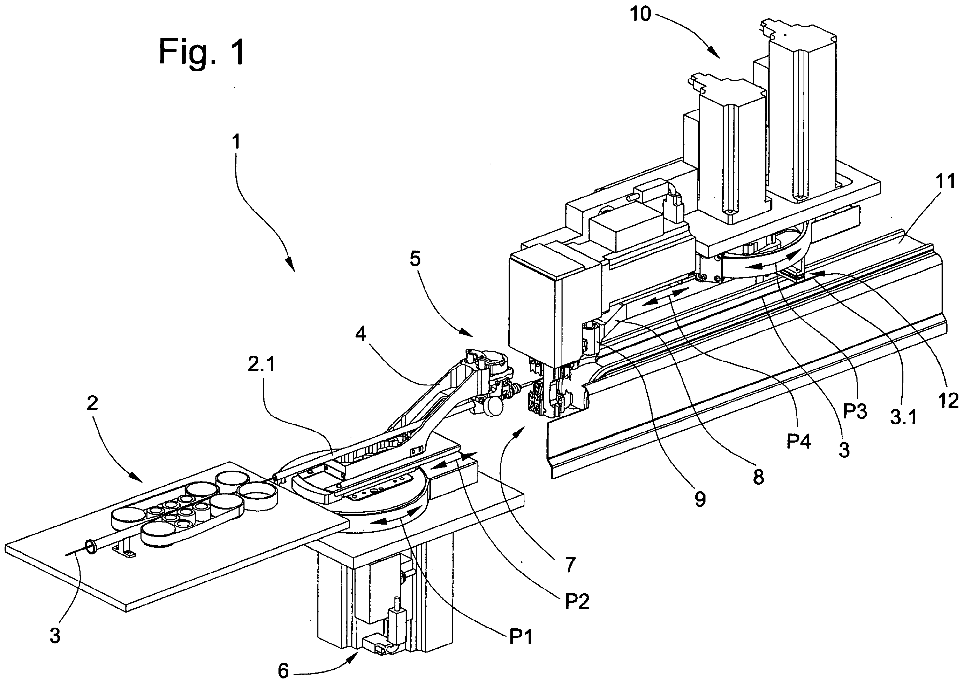

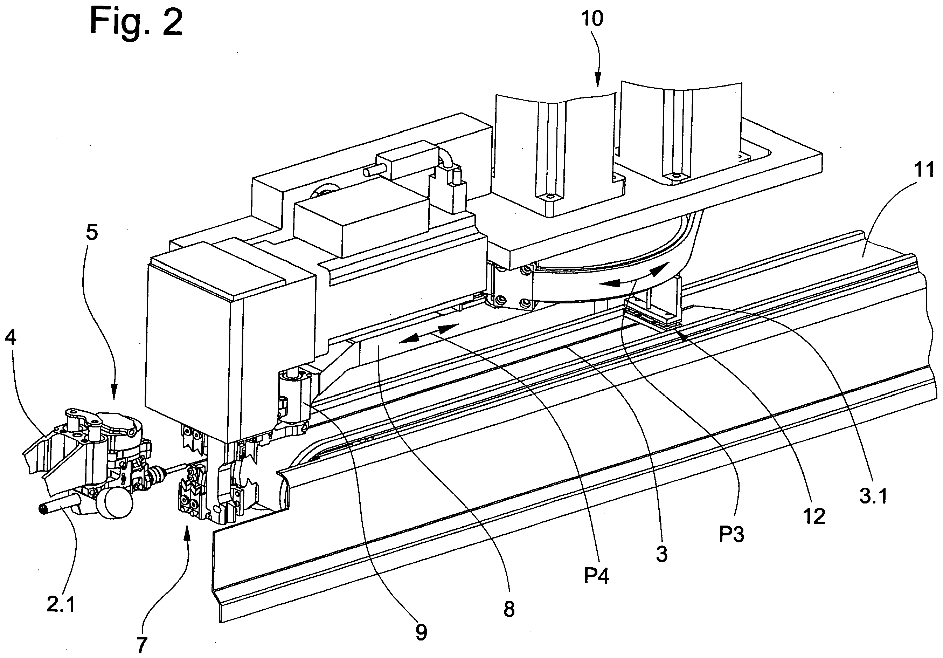

Fig. 1 und 2 zeigen eine Kabelverarbeitungsmaschine 1 mit einer als Bandantrieb 2 ausgebildeten Kabelvorschubeinrichtung, der ein Kabel 3 durch eine Führung 2.1 einem ersten Schwenkarm 4 mit einem ersten Greifer 5 zuführt. Mittels ersten Antrieben 6 kann der erste Schwenkarm 4 in eine mit einem Pfeil P1 symbolisierte Drehbewegung und/oder in eine mit einem Pfeil P2 symbolisierte Linearbewegung versetzt werden. Mit Trenn-/Abisoliermessern 7 kann das Kabel getrennt und/oder abisoliert werden.

Im weiteren weist die Kabelverarbeitungsmaschine 1 einen zweiten Schwenkarm 8 mit einem zweiten Greifer 9 auf. Mittels zweiten Antrieben 10 kann der zweite Schwenkarm 8 in eine mit einem Pfeil P3 symbolisierte Drehbewegung und/oder in eine mit einem Pfeil P4 symbolisierte Linearbewegung versetzt werden. Der erste Schwenkarm 4 bedient als Zuführeinrichtung mittels Drehbewegung P1 und Linearbewegung P2 seitlich der Kabellängsachse angeordnete, nicht dargestellte Bearbeitungsstationen (beispielsweise Crimppressen) mit voreilenden Kabelenden. Der zweite Schwenkarm 8 bedient als Zuführeinrichtung mittels Drehbewegung P3 und Linearbewegung P4 seitlich der Kabellängsachse angeordnete, nicht dargestellte Bearbeitungsstationen (beispielsweise Crimppressen) mit nacheilenden Kabelenden.

Die Messung der effektiv vom Bandantrieb 2 vorgeschobenen Kabellänge (auch Referenzmessung genannt) wird in folgenden Schritten ausgeführt:
a) Der Bandantrieb 2 schiebt das Kabel 3 durch den ersten Greifer 5 bis unter die Trenn-/Abisoliermesser 7, die das Kabel 3 anschneiden.
b) Das Kabel 3 wird weiter vorgeschoben, wobei das voreilende Kabelende 3.1 mittels eines Transportbandes 11 transportiert wird. Die vorgeschobene Kabellänge wird vom Bandantrieb 2 laufend gemessen.
c) Das Kabel 3 wird um eine vom Bandantrieb 2 gemessene Länge vorgeschoben, wobei das voreilende Kabelende 3.1 unter einem Kabelenddetektor 12 durchbewegt wird. Nach dem Kabelvorschub wird das Kabeltransportband 11 stillgesetzt.
d) Der Kabelenddetektor 12 presst das Kabel 3 auf das Kabeltransportband 11. Der erste Greifer 5 hält das Kabel 3 fest, wobei der erste Schwenkarm 4 mit einer linearen Rückwärtsbewegung P2 das Kabel zurückzieht. Sobald das voreilende Kabelende 3.1 den Kabelenddetektor 12 verlässt, wird die Rückwärtsbewegung P2 des ersten Schwenkarmes 4 mittels Signal des Kabelenddetektors 12 gestoppt.
e) Der Weg des ersten Schwenkarmes 4 während der Rückwärtsbewegung P2 ist im Schritt d) erfasst worden. Aus der vom Bandantrieb 2 gemessenen Kabellänge, aus der Distanz zwischen Trenn-/Abisoliermesser 7 und Kabelenddetektor 12 (Messstrecke) und aus dem Weg des ersten Schwenkarmes 4 wird von der Steuerung ein Korrekturfaktor berechnet, der bei der der Referenzmessung nachfolgenden Kabelverarbeitung berücksichtigt wird, indem die vom Bandantrieb 2 vorgeschobene Länge korrigiert wird.

Beispielsweise kann die vom Bandantrieb 2 gemessene Kabellänge 520 mm, die Distanz zwischen Trenn-/Abisoliermesser 7 und Kabelenddetektor 12 500 mm und der Weg des ersten Schwenkarmes 4 10 mm sein. In diesem Beispiel ist die effektive mittels des Bandantriebes 2 vorgeschobene Kabellänge nicht 520 mm sondern lediglich 510 mm. Der vom Bandantrieb 2 gemessene Kabelvorschub weicht um 10 mm nach unten ab. Die so mit der Referenzmessung ermittelte Abweichung wird in der nachfolgenden Kabelverarbeitung auf die zu verarbeitende Kabellänge bezogen berücksichtigt. Die mit der Referenzmessung ermittelte Abweichung passt nur auf das bei der Referenzmessung verwendete Kabel 3. Andere Kabel bedingen erneute Referenzmessungen.

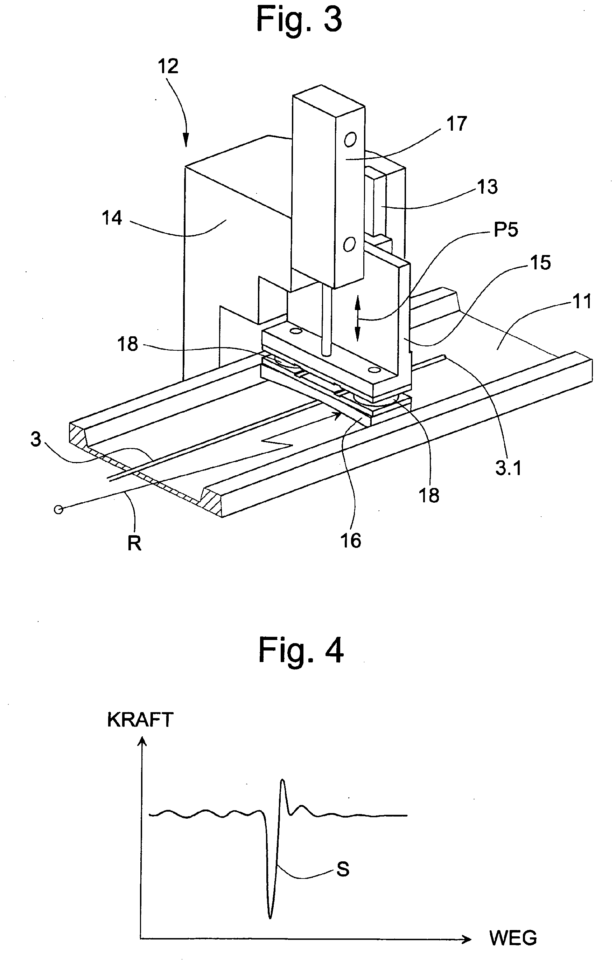

Fig. 3 zeigt Einzelheiten des Kabelenddetektors 12, der die Anwesenheit des voreilenden Kabelendes 3.1 auf dem Kabeltransportband 11 detektiert. Ein entlang einer Führung 13 eines Gehäuses 14 bewegbarer Träger 15 mit Fuss 16 wird mittels eines Zylinders 17 in Pfeilrichtung P5 bewegt. Zwischen Träger 15 und Fuss 16 sind Piezoelemente 18 angeordnet, die den Druck des Fusses 16 auf das voreilende Kabelende 3.1 bzw. auf das Kabeltransportband 11 detektieren. Sobald beim Zurückziehen des Kabels 3 das vorauseilende Kabelende 3.1 den Fuss 16 verlässt, erzeugen die Piezoelemente 18 ein Signal S gemäss Fig. 4. Wenn das voreilende Kabelende 3.1 den Fuss 16 verlässt, bricht der Druck auf die Piezoelemente 18 kurzzeitig ein und baut sich beim Auftreffen des Fusses 16 auf dem Kabeltransportband 11 wieder auf. Das Signal S stoppt die Linearbewegung P2 des ersten Schwenkarmes 4. Der Fuss 16 weist einen Radius R auf, damit seitlich versetzte, voreilende Kabelende 3.1 korrekt detektiert werden.

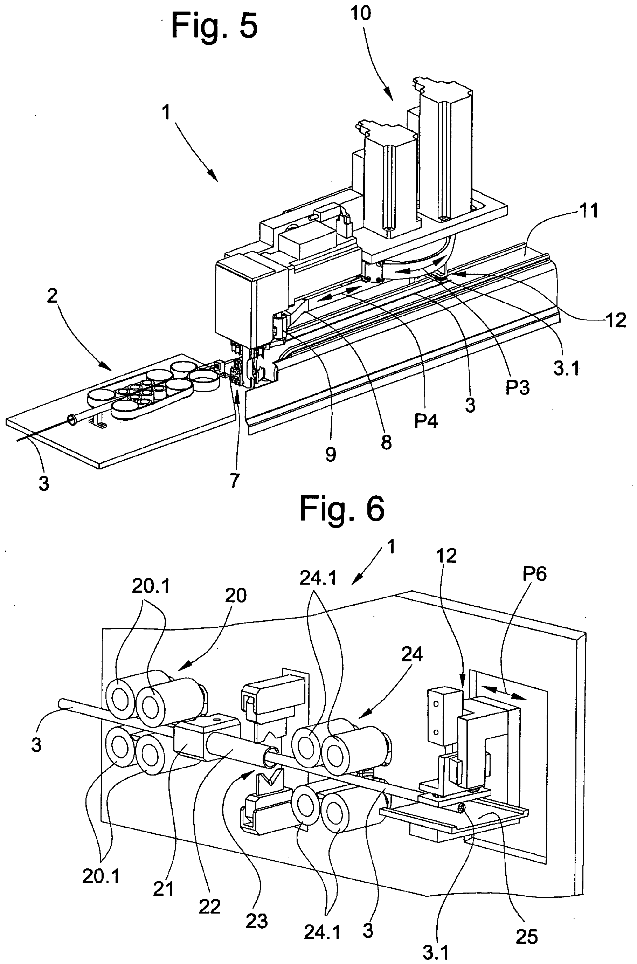

Fig. 5 zeigt eine Kabelverarbeitungsmaschine 1 mit nur einem Schwenkarm. Der erste Schwenkarm 4 ist nicht vorhanden. Das Kabel 3 wird wie oben erläutert mittels des Bandantriebes 2 bis unter die Trenn-/Abisoliermesser 7 vorgeschoben, die das Kabel 3 anschneiden. Dann wird das Kabel 3 weiter vorgeschoben, wobei das voreilende Kabelende 3.1 mittels des Transportbandes 11 transportiert wird und die vorgeschobene Kabellänge vom Bandantrieb 2 laufend gemessen wird. Nach dem Vorschub der vom Bandantrieb 2 gemessenen Solllänge presst der Kabelenddetektor 12 das Kabel 3 auf das Kabeltransportband 11 und der Bandantrieb 2 zieht das Kabel 3 mit einer Rückwärtsbewegung zurück.

Sobald das voreilende Kabelende 3.1 den Kabelenddetektor 12 verlässt, wird die Rückwärtsbewegung des Bandantriebes 2 mittels Signal des Kabelenddetektors 12 gestoppt. Die Korrektur der aus Kabelvorschub und Kabelrückzug ermittelten Abweichung erfolgt sinngemäss wie oben erläutert.

Fig. 6 zeigt eine Kabelverarbeitungsmaschine 1 mit als Kabelvorschubeinrichtung dienenden Rollenpaaren. Das Kabel 3 ist mittels einer ersten Transporteinheit 20 vorschiebbar und rückziehbar, wobei obere und untere antreibbare Rollenpaare 20.1 die Bewegung des Kabels 3 bewirken. Das voreilende Kabelende 3.1 wird in einem mittels Schwenkmechanismus 21 schwenkbaren, als Zuführeinrichtung dienenden Führungsrohr 22 bis zu einer als Trennmesser 23 ausgebildeten Bearbeitungstation vorgeschoben, wobei das Trennmesser 23 das voreilende Kabelende 3.1 anschneidet.

Zur Bearbeitung des nacheilenden Kabelendes ist das Kabel 2 mittels einer zweiten Transporteinheit 24 vorschiebbar und rückziehbar, wobei obere und untere antreibbare Rollenpaare 24.1 die Bewegung des Kabels 3 bewirken. Während der Messung der Kabellänge sind die Rollenpaare 24.1 geöffnet.

Nach dem Anschneiden wird das Kabel 3 mittels der als Kabelvorschubeinrichtung dienenden ersten Transporteinheit 20 weiter vorgeschoben, wobei die vorgeschobene Kabellänge von der Transporteinheit 20 laufend gemessen wird. Nach dem Vorschub der von der Transporteinheit 20 gemessenen Solllänge presst der Kabelenddetektor 12 das Kabel 3 auf einen Teller 25 und die Transporteinheit 20 zieht das Kabel 3 mit einer Rückwärtsbewegung zurück. Sobald das voreilende Kabelende 3.1 den Kabelenddetektor 12 verlässt, wird die Rückwärtsbewegung der Transporteinheit 20 mittels Signal des Kabelenddetektors 12 gestoppt. Die Korrektur der aus Kabelvorschub und Kabelrückzug ermittelten Abweichung erfolgt sinngemäss wie oben erläutert.

Der Kabelenddetektor 12 kann auch in der mittels Pfeil P6 symbolisierten Richtung bewegbar ausgebildet sein. In diesem Fall erfolgt zur Messung der Kabellänge kein Kabelrückzug. Der Kabelenddetektor 12 wird nach dem Absenken in horizontaler Richtung P6 beispielsweise elektrisch bewegt, bis der Fuss 16 des Kabelenddetektors 12 das voreilende Kabelende 3.1 verlässt. Der zurückgelegte Weg des Kabelenddetektors 12 entspricht der zurückgezogenen Länge des Kabels 3. Die Korrektur der aus Kabelvorschub und zurückgelegtem Weg des Kabelenddetektors 12 ermittelten Abweichung erfolgt sinngemäss wie oben erläutert.

## Patentansprüche

1. Einrichtung zur Messung der Länge eines Kabels (3), welches zur Konfektionierung Bearbeitungsstationen zuführbar ist, wobei eine Kabelvorschubeinrichtung (2,20) das Kabel (3) vorschiebt und Zuführeinrichtungen (5,9,22) die Kabelenden den Bearbeitungsstationen zuführen, wobei zur Durchführung einer Referenzmessung am Ende einer Messstrecke ein Kabelenddetektor (12) vorgesehen ist, der das voreilende Kabelende (3.1) des mittels Kabelvorschubeinrichtung (2,20) vorgeschobenen Kabels (3) detektiert
**dadurch gekennzeichnet,**
**dass** der Kabelenddetektor (12) an einem Träger (15) mit Fuss (16) angeordnete Piezoelemente (18) aufweist, wobei der Fuss (16) auf das Kabel (3) absenkbar ist.

2. Einrichtung nach einem der Ansprüchen 1,
**dadurch gekennzeichnet**
**dass** der Kabelenddetektor (12) in horizontaler Richtung (P6) bewegbar ist bis mindestens der Fuss (16) des Kabelenddetektors (12) das voreilende Kabelende (3.1) verlässt.

3. Verfahren zur Messung der Länge eines Kabels (3), welches zur Konfektionierung Bearbeitungsstationen zuführbar ist, wobei eine Kabelvorschubeinrichtung (2,20) das Kabel (3) vorschiebt und Zuführeinrichtungen (5,9,22) die Kabelenden den Bearbeitungsstationen zuführen, wobei zur Durchführung einer Referenzmessung im Schritt a) die Kabelvorschubeinrichtung (2,20) das Kabel (3) bis unter Trenn-/Abisoliermesser (7,23) vorschiebt, die das Kabel (3) anschneiden, im Schritt b) das Kabel (3) um eine von der Kabelvorschubeinrichtung (2,20) gemessene Länge vorgeschoben wird, wobei das voreilende Kabelende (3.1) unter einem Kabelenddetektor (12) durchbewegt wird **dadurch gekennzeichnet, dass** im Schritt c) das Kabel (3) mit einer linearen Rückwärtsbewegung zurückgezogen wird oder der Kabelenddetektor (12) in horizontaler Richtung bewegt wird, bis das voreilende Kabelende (3.1) den Kabelenddetektor (12) verlässt.

4. Verfahren nach Anspruch 3,
**dadurch gekennzeichnet,**
**dass** aus der von der Kabelvorschubeinrichtung (2,20) gemessenen Kabellänge, aus der Distanz zwischen Trenn-/Abisoliermesser (7) und Kabelenddetektor (12) (Messstrecke) und aus der Rückwärtsbewegung des Kabels (3) oder der horizontalen Bewegung des Kabelenddetektors (12) von einer Steuerung ein Korrekturfaktor berechnet wird, der bei der der Referenzmessung nachfolgenden Kabelverarbeitung berücksichtigt wird, indem die von der Kabelvorschubeinrichtung (2,20) vorgeschobene Länge korrigiert wird.

## Claims

1. Device for measuring the length of a cable (3) which can be supplied for manufacture to processing stations, wherein a cable feed device (2,20) feeds the cable (3) forward and supply devices (5,9,22) supply the cable ends to the processing stations, wherein in order to take a reference measurement at the end of a measuring section, a cable end detector (12) is provided which detects the lead cable end (3.1) of the cable (3) fed forward by means of the cable feeding device (2,20),
**characterized in that**
the cable end detector (12) has piezo elements (18) arranged on a carrier (15) with a foot (16), wherein the foot (16) can be lowered onto the cable (3).

2. The device according to one of claims 1,
**characterized in that**
the cable end detector (12) is movable in a horizontal direction (P6) at least until the foot (16) of the cable end detector (12) leaves the lead cable end (3.1).

3. A method for measuring the length of a cable (3) which can be supplied for manufacture to processing stations, wherein a cable feed device (2,20) feeds the cable (3) forward and supply devices (5,9,22) supply the cable ends to the processing stations, wherein in order to take a reference measurement
in step a) the cable feed device (2,20) feeds the cable (3) forward to below the cutting/stripping knives (7,23) which cut the cable (3),
in step b) the cable (3) is fed forward by a length measured by the cable feed mechanism (2,20), wherein the front cable end (3,1) is moved through below a cable end detector (12), **characterized in that**
in step c) the cable (3) is drawn back with a linear backwards movement or the cable end detector (12) is moved in a horizontal direction until the lead cable end (3.1) leaves the cable end detector (12).

4. The method according to claim 3,
**characterized in that**
a correction factor is calculated by a control system from the cable length measured by the cable feed device (2,20), from the space between the cutting/stripping knives (7) and the cable end detector (12) (measuring section) and from the backwards movement of the cable (3) or the horizontal movement of the cable end detector (12), which correction factor is taken into account during the cable processing following the reference measurement, **in that** the length advanced by the cable feed device (2,20) is corrected.

## Revendications

1. Dispositif de mesure de la longueur d'un câble (3) qui peut être acheminé vers des postes de traitement pour façonnage, dans lequel un dispositif d'avance de câble (2,20) avance le câble (3) et des dispositifs d'acheminement (5,9,22) acheminent les extrémités du câble vers les postes de traitement, étant prévus, pour la réalisation d'une mesure de référence à l'extrémité d'un parcours de mesure, des détecteurs d'extrémité de câble (12) qui détectent l'extrémité avant (3.1) du câble (3) avancé au moyen du dispositif d'avance de câble (2,20),
**caractérisé en ce que**
le détecteur d'extrémité de câble (12) présente des éléments piézo-électriques (18) disposés au niveau d'un support (15) par leur pied (16), le pied (16) pouvant être descendu sur le câble (3).

2. Dispositif selon la revendication 1,
**caractérisé en ce que**
le détecteur d'extrémité de câble (12) est mobile dans le sens horizontal (P6) jusqu'à ce qu'au moins le pied (16) du détecteur d'extrémité de câble (12) quitte l'extrémité avant du câble (3.1).

3. Procédé de mesure de la longueur d'un câble (3) qui peut être acheminé pour façonnage vers des postes de traitement, dans lequel un dispositif d'avance de câble (2,20) avance le câble (3) et des dispositifs d'acheminement (5,9,22) acheminent les extrémités du câble vers les postes de traitement,
sachant que, pour réaliser une mesure de référence, en étape a), le dispositif d'avance de câble (2,20) avance le câble (3) jusque sous des lames de sectionnement/dénudage (7,23) qui incisent le câble (3),
en étape b), le câble (3) est avancé d'une longueur mesurée par le dispositif d'avance de câble (2,20), l'extrémité avant du câble (3.1) étant déplacée sous un détecteur d'extrémité de câble (12),
**caractérisé en ce que**,
en étape c), le câble (3) est reculé par un mouvement vers l'arrière ou le détecteur d'extrémité de câble (12) est déplacé dans le sens horizontal jusqu'à ce que l'extrémité avant du câble (3.1) quitte le détecteur d'extrémité de câble (12).

4. Procédé selon la revendication 3,
**caractérisé en ce que**,
à partir de la longueur de câble mesurée par le dispositif d'avance de câble (2,20), à partir de la distance entre la lame de sectionnement/dénudage (7) et le détecteur d'extrémité de câble (12) (parcours de mesure) et à partir du mouvement vers l'arrière du câble (3) ou du mouvement horizontal du détecteur d'extrémité de câble (12), il est calculé par une commande un facteur de correction qui est pris en compte lors du traitement du câble suivant la mesure de référence en corrigeant la longueur avancée par le dispositif d'avance de câble (2,20).
